# EUROPEAN PATENT SPECIFICATION

(11) **EP 1 478 111 B1**
(45) Date of publication and mention of the grant of the patent: **03.03.2010**
(21) Application number: 04252491.8
(22) Date of filing: 29.04.2004
(51) Int. Cl.: H04B 17/00, H04B 7/005

(54) **Transmission power calibration**
Sendeleistungskalibrierung
Etalonnage de la puissance d'émission

(30) Priority: 14.05.2003 GB 0311117
(43) Date of publication of application: 17.11.2004
(73) Proprietor: UbiNetics (VPT) Limited, Cambridge CB4 0WZ (GB)
(72) Inventor: Appleton, Ian K., Letchworth, Hertforshire SG6 2HQ (GB); Goodwin, Stephen, Ely, Cambridgeshire CB6 2SR (GB)
(74) Representative: Wright, Howard Hugh Burnby

(56) References cited:
- WO-A-01/26259
- WO-A-2004/004176
- US-A1- 2002 154 708
- US-B1- 6 711 388

## Description

The present invention relates to the control of the transmission power of telecommunications devices, such as mobile telephone handsets, and in particular to the calibration of such devices.

Telecommunication devices transmit signals to base stations which are connected to, and form part of, a telecommunications network. The power of transmission needs to be varied, depending on various factors such as distance from the base station, geographic terrain, weather conditions and the like. As a consequence, devices increase and decrease the power level across a transmission power range.

The UMTS specification 3GPP TS 25.101 places a requirement on telecommunications devices to control their transmission power to a defined accuracy range, and the accuracy range narrows as the power level reaches its maximum value. In earlier mobile telephone systems, such as GSM, there are accuracy range requirements, but in those cases, closed loop control of the transmission power is easily applicable because the transmission power range is narrower. However, with the UMTS specifications that apply to W-CDMA, it is not possible to apply closed loop control to the transmit power directly. This is because the W-CDMA signal has a 5 MHz wide bandwidth which makes it very difficult to implement a closed loop system due to phase changes in the loop. Therefore, UMTS devices will typically use open loop power control where precise calibration takes place during manufacture to ensure that the actual transmission power is within the accuracy range defined by the UMTS specifications. Unfortunately, the calibration required is a lengthy process since calibration must take place across the entire bandwidth and power range.

The transmission power in a UMTS device can be controlled, typically, by three things. The first is the base band processor which generates an I/Q signal, the amplitude of which can be changed. The second is an intermediate frequency (IF) stage which includes an amplifier, the gain of which is programmable, or adjustable. The third is a radio frequency (RF) stage of the transmitter which includes an amplifier, the gain of which is adjustable, or programmable. The overall power of the transmitter is the sum of the gain settings of each section and is measured in dB.

It would be expected to be necessary to calibrate each gain stage during production. However, this is extremely time consuming, and therefore costly. An aim of the present invention is to substantially reduce the calibration which is required during production. This will lead to a substantial saving in the cost and time taken to manufacture the devices. It should be understood that the baseband signal is digitally generated, and as such, does not require calibration.

WO 01/26259 discloses a method of calibrating a mobile device using a loop-back module. The loop-back module mixes transmitted RF signals from the mobile phone and generates a loop-back signal receive frequency of the mobile phone for use in calibrating the phone's transmitter during initial calibration of the phone during manufacture. The loop-back signal is applied to the phone's attenna, and the phone then evaluates the loop-back signal to determine the appropriate offset for the transmitter chain at that frequency and power level. This process is iterated until the desired number of frequencies and power levels are tested for proper calibration. The offsets are stored in memory for later use by the phone.

According to a first aspect of the invention, a method of calibrating a UMTS telecommunications device in service comprises the steps of increasing or decreasing the power of a UMTS signal transmitted by a transmitter element of the device; measuring the change in the power of the signal transmitted by the transmitter element; determining the difference in the size of the desired power change and the size of the measured power change, creating a calibration table holding data relating the desired power of transmission to the power settings for the transmitter element; and changing the calibration of the device by re-programming the calibration table to reduce the difference in the changes for subsequent power changes.

It will be understood here that the calibration taking place is that of the step sizes. The power settings typically correspond to amplifier gain settings for the transmitter element.

The difference in the size of the desired power change and the size of the measured power change is intended to be measured over a number of steps, and the calibration is intended to take place on the basis of a number of these steps. In this way, the effect of erroneous measurements will be reduced. Such erroneous measurements can occur where power levels are very low and the noise affects the measurement.

It will also be understood that the method will normally include an additional step of initially calibrating the device with a default calibration before the step of increasing or decreasing the power of a signal by the transmitter element. In this way, during manufacture of the device, the default calibration can be programmed into the device to give a reasonably accurate start point for calibration. Subsequent calibrations take place in service.

In most circumstances the increasing or decreasing of the power of the signal is in response to a network power change command, but on some occasions, it could be due to a handover command, or a change which is part of the initial access procedure, where the power is increased in steps by the device until a response is received from the network.

According to a second aspect of the invention, a UMTS telecommunications device comprises a transmitter element for transmitting a UMTS signal to a remote base station; a power controller arranged to increase or decrease the power of transmission of the transmitter element; a power detector arranged to detect the power of the signal transmitted by the transmitter element; a comparator for determining the difference in the size of the desired power change and the size of the measured power change; and a memory device in which is constructed a calibration table holding data relating the desired power of transmission to the power settings of the transmitter element; wherein the power controller is further arranged to be re-calibrated by re-programming the calibration table in service to reduce the difference between the size of the desired power change and the size of the measured power change.

The device might also include a receiver element for receiving power control command signals transmitted by the base station, wherein the power controller is arranged to increase or decrease the power of transmission of the transmitter element in response to the received power control command signals.

The transmitter element is intended to include an amplifier having an adjustable gain, this adjustable gain constituting the power settings.

It is intended that the device be set to a default setting on manufacture whereby a nominal calibration for the IF and RF gain stages is initially used. The method allows the errors to be identified between these gain stages and the accurate calibration, and so re-calibration is effectively achieved. While it is clear that this will assist in reducing the manufacturing cost and time since calibration takes place in service, it will also be understood that, as the device changes, due to ageing components or large changes in temperature amongst other things, the device will continue to be re-calibrated for optimal operation.

The transmission power is controlled by an algorithm which is initially set to include default settings. This is normally achieved in practice by selecting one of a number of gain steps in the IF and RF gain stages, according to some predefined rules, and then providing the fine control to achieve the exact gain by adjusting the baseband I/Q signal amplitude.

The algorithm will have some predefined nominal calibration for the IF and RF gain stages which are used initially. One of the characteristics of the UMTS system is that it is not possible to use closed looped techniques to control the output power across the whole power range, but this algorithm makes use of the measured power over a limited range to improve the calibration of the system.

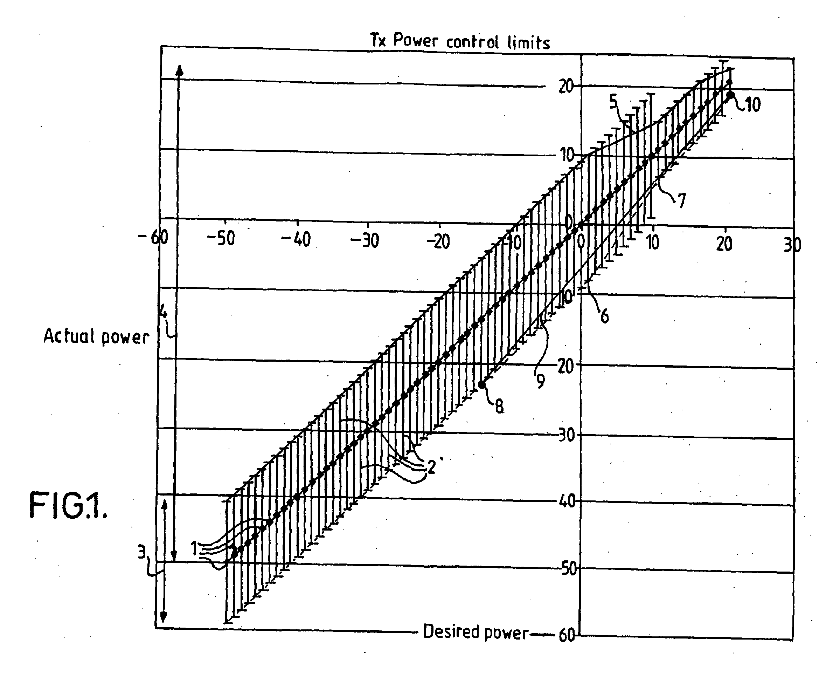

The present invention will now be described by way of example only with reference to Figure 1, which is a graph showing actual transmission power plotted against the desired power, with bars showing the permitted accuracy range within the UMTS specification.

The UMTS specification places a requirement on mobile telecommunication devices to control their transmission power to a defined accuracy. This is indicated in Figure 1. In Figure 1, the desired power output is plotted on the x-axis, and the actual power output is plotted on the y-axis. The line of points 1 on the graph indicate power steps for the ideal situation where the actual power is equal to the desired power, and these points 1 form a straight line passing through the origin and having a gradient of 1. Each point 1 plotted on the graph includes a bar 2 showing the accuracy range within which the actual power must fall for particular desired powers. The accuracy range for a desired power level of - 50 dBM is indicated in the Figure by an arrow 3. For example, where the desired power is -20 dBm it is permitted for the actual power to fall somewhere in the range between -11 dBm and -29 dBm. However, it will be noted that the accuracy range above a desired power of 10 dBm is substantially less than for lower desired powers. This is indicated by short bars for the point above 10 dBm. As a result of the accuracy range being much narrower, open loop controlled power steps up and down the power range must be closely controlled, but instead of using open loop control of the transmission power, this telecommunication device includes a power detector. Suitable power detectors must be accurate over a large range of power levels, but no suitable detectors are available covering the entire 71 dBm power range from -50dBm to +21dBm. It must be borne in mind that a suitable detector must be accurate across a broad power range and a broad frequency range, and must also be temperature stable across both frequency and power ranges. Power detectors that are able work across the whole range are not available. In this example, the power range is indicated by arrow 4 in Figure 1.

Since open loop power control requires a considerable amount of work during production in order to calibrate it, closed loop power control is used for part of the power range, and open loop control is used for the remainder. A suitable device is an Analog Devices Inc. RF detector/controller AD8314 which has a power range of 35dBm. It is, therefore, arranged to detect the power at the upper end of the power range from -14dBm to +21dBm. The remaining range below -14dBm uses open loop power control. Of course, the detector could be arranged to detect a different part of the power range, but since closed loop power control is generally more accurate than open loop power control, a narrower accuracy range at the top end of the power range means that it is advantageous to use the closed loop control for the top end of the range. It is important, that, as the desired power is stepped up and down, the actual power increases and reduces in steps falling within tolerance.

It will be appreciated from Figure 1 that, as steps are taken to increase the power levels, the situation can arise where, if the actual power level is towards the top end of the accuracy range, if the desired power increases above 10dBm, the actual power must fall in order to fit within the narrower accuracy range. As a consequence, it is desirable that the line bounding the top of the accuracy range always has a positive gradient. It will, therefore, be seen that a line 5 is indicated which effectively reduces the accuracy range for a desired power of +1dBm to +11dBm in order to achieve a smooth, positively gradiented transition.

The power level from the telecommunication device is controlled by three different stages, firstly, the baseband I/Q level, secondly the intermediate frequency (IF) gain, and thirdly the radio frequency (RF) gain. Coarse gain steps down to about 1dB are executed by adjustment of the RF and IF gain stages. The necessary relationship between the RF and IF gain stages is maintained. If the IF gain is too high, the transmission signal will be distorted by the RF section, leading to high spurious signals. If it is too low, the signal to noise ratio of the transmitted signal will be decreased. Therefore it is important to maintain an optimum relationship between the IF and RF gain stages.

At lower RF gain settings, the output IP3 (the third order intercept point, i.e. the point on a graph of output power versus input power where the third order output line crosses the linear first order slope) reduces and so the input to the RF pre amplifier has to reduce accordingly. The relationship between the input power level to the pre amplifier and its gain is maintained at a level that keeps the linearity within required limits. A table will be loaded into a baseband memory which gives the gain of IF and RF stages at every nominal power level in dB increments. In this way the open loop control is established.

In order to achieve very fine resolution, the I/Q levels will be adjusted independently of the table. These will be adjusted for fine steps on top of a nominal 1dB step size set in the IF/RF gain table in the baseband memory.

A telecommunications device includes not only a transmitter element, but the logarithmic power detector as described above to measure the resulting output power. Clearly, there must be some nominal pre-programmed calibration whereby there is some reasonably close relationship between the desired power levels of the transmitter and the actual power levels. Since the actual power levels are determined by the selected gain of the IF and RF stages, the calibration data will link the gain settings of the IF and RF stages with the desired power levels. Clearly, only using nominal calibration means that the line of points in Figure 1 would not necessarily have a gradient of exactly 1, and would not necessarily pass through the origin.

The calibration data is held in a table in memory such that, for every desired power level, there is a corresponding selected gain of the IF and RF stages. As calibration takes place in service, the table is updated with a new calibration data.

Calibration to bring the line of points so that it has a gradient of 1 takes place in the following way:

During use of the telecommunications device on a telecommunications network, the network base station will send power control change commands to the device indicating that it should increase or decrease its transmission power by a step of a size defined by the command. This is received by a receiver part of the device, and an algorithm determines the required power step from the command, and on the basis of the existing calibration data; changes the gain settings of the IF and RF stages in order to effect a power step from the transmitter element. The detector detects the step in power and measures it. A comparator then compares the step size according to the command with the step size measured by the detector. If there is a difference between these two powers, calibration occurs by changing the step sizes. Such a determination may take place over a number of steps so that if there is an erroneous power measurement, for example, this will not be allowed to throw the calibration out. Such erroneous power measurements might occur as a result of noise at low power levels. By ensuring that the step sizes are correct, the gradient of the points on the graph shown in Figure 1 will be maintained at or very close to 1.

Since there are two gain stages to calibrate and a large number of steps, it is not generally possible to deduce the error in the calibration table directly from the error in the transmitted power step size. Rather, the algorithm needs to accumulate information gathered from a number of power changes in a database, and from this accumulated information, it can deduce the changes required to the calibration tables. Thus, self calibration can be achieved.

Calibration to ensure that the line of points in the graph in Figure 1 pass through the origin takes place in the following way:

This part of the calibration can only be achieved in static power conditions, where the network has not commanded a power change. In this case, the absolute power level is calibrated, not the step sizes. The actual power level of the signal generated by the transmitter is measured by the detector at a particular time, and this is compared with the power level selected by the power control algorithm which is the desired power level. The difference between the two is the amount by which the relationship between the two must change in order to achieve accurate calibration. This is achieved by determining a correction factor which is applied to the gain of the IF and RF stages. Applying this correction factor will have the effect of bringing the actual power into line with the desired power level, and this has the effect on the graph of Figure 1, to bring the line of points so that it passes through the origin. The correction factor is added into the calibration table.

Restrictions in the UMTS specification means that it might not be possible to change the power level instantaneously, since this could result in a change in output power which is larger than the maximum allowed, which in the case of a zero dB commanded power change (i.e. no power change at all) is 0.5dB. Instead, the correction factor may be applied over a number of slots, for example by a maximum of 0.4dB per 666µS slot, to ensure that the specification limit is not exceeded.

## Claims

1. A method of calibrating a UMTS telecommunications device in service comprising the steps of:
increasing or decreasing the power of a UMTS signal transmitted by a transmitter element of the device;
measuring the change in the power of the signal transmitted by the transmitter element;
determining the difference in the size of the desired power change and the size of the measured power change,
creating a calibration table holding data relating the desired power of transmission to the power settings for the transmitter element; and
changing the calibration of the device by re-programming the calibration table to reduce the difference in the changes for subsequent power changes.

2. A method according to claim 1, wherein the power settings for the transmitter element are amplifier gain settings.

3. A method according to claim 1 or 2, wherein the changing of the calibration takes place on the basis of a plurality of differences being determined.

4. A method according to any one of the preceding claims, further comprising the step of initially calibrating the device with a default calibration before the step of increasing or decreasing the power of a signal by the transmitter element.

5. A method according to any one of claims 1 to 4, further comprising the step of receiving a network power change command, to which the device responds by the said increasing or decreasing of the power of the signal transmitted by the transmitter element.

6. A UMTS telecommunications device comprising:
a transmitter element for transmitting a UMTS signal to a remote base station;
a power controller arranged to increase or decrease the power of transmission of the transmitter element;
a power detector arranged to detect the power of the signal transmitted by the transmitter element;
a comparator for determining the difference in the size of the desired power change and the size of the measured power change; and
a memory device in which is constructed a calibration table holding data relating the desired power of transmission to the power settings of the transmitter element;
wherein the power controller is further arranged to be re-calibrated by re-programming the calibration table in service to reduce the difference between the size of the desired power change and the size of the measured power change.

7. A telecommunications device according to claim 6, further comprising a receiver element for receiving power control command signals transmitted by the base station, and wherein the power controller is arranged to increase or decrease the power of transmission of the transmitter element in response to the received power control command signals.

8. A telecommunications device according to claim 6 or 7, wherein the transmitter element includes an amplifier having an adjustable gain, this adjustable gain constituting the power settings.

## Patentansprüche

1. Verfahren zum Kalibrieren einer UMTS-Telekommunikationseinrichtung während des Betriebs umfassend die folgenden Schritte:
Erhöhen oder Erniedrigen der Leistung eines von einem Transmitterelement der Vorrichtung übertragenen UMTS-Signals;
Messen der Leistungsänderung des von dem Transmitterelement übertragenen Signals;
Bestimmen der Größendifferenz der gewünschten Leistungsänderung und der Größe der gemessenen Leistungsänderung,
Erzeugen einer Kalibrierungstabelle mit Daten, welche die gewünschte Übertragungsleistung mit den Leistungseinstellungen für das Transmitterelement verknüpft; und
Ändern der Kalibrierung der Vorrichtung mittels Umprogrammieren der Kalibrierungstabelle, um die Differenz bei den Änderungen für nachfolgende Leistungsänderungen zu reduzieren.

2. Verfahren nach Anspruch 1, bei welchem die Leistungseinstellungen für das Transmitterelement Verstärkungsfaktor-Einstellungen sind.

3. Verfahren nach Anspruch 1 oder 2, bei welchem die Veränderung der Kalibrierung auf Grundlage einer Vielzahl von festgestellten Differenzen stattfindet.

4. Verfahren nach einem der vorhergehenden Ansprüche, weiterhin umfassend den Schritt, dass die Vorrichtung zunächst vor dem Schritt, bei welchem die Leistung eines Signals des Transmitterelements erhöht oder erniedrigt wird, mit einer Standardkalibrierung kalibriert wird.

5. Verfahren nach einem der Ansprüche 1 bis 4, weiterhin umfassend den Schritt des Empfangens eines Netzwerk-Leistungswechsel-Befehls, auf welchen die Vorrichtung durch genanntes Erhöhen oder Erniedrigen der Leistung des von dem Transmitter-Element übermittelten Signals antwortet.

6. Eine UMTS-Telekommunikationseinrichtung umfassend:
ein Transmitterelement zum Übertragen eines UMTS-Signals an eine entfernte Basisstation;
eine Leistungssteuerung zum Erhöhen oder Erniedrigen der Übertragungsleistung des Transmitterelements;
einen Leistungsdetektor, welcher so angeordnet ist, dass er die Leistung des von dem Transmitter übermittelten Signals feststellt;
einen Komparator, um die Größendifferenz des gewünschten Leistungswechsels und der Größe des gemessenen Leistungswechsels festzustellen;
und eine Speichervorrichtung, innerhalb welcher sich eine Kalibrierungstabelle befindet, welche Daten enthält, welche die gewünschte Übertragungsleistung mit den Leistungseinstellungen für das Transmitterelement verknüpfen;
bei welcher die Leistungssteuerung weiterhin derart angeordnet ist, dass sie durch Umprogrammieren der Kalibrierungstabelle während des Betriebs neu kalibriert werden kann, um die Differenz zwischen der Größe der gewünschten Leistungsänderung und der Größe der gemessenen Leistungsänderung zu reduzieren.

7. Telekommunikationseinrichtung nach Anspruch 6, weiterhin umfassend ein Empfängerelement zum Empfangen von von der Basisstation übertragenen Leistungssteuerungs-Signalen, bei welcher die Leistungssteuerung derart angeordnet ist, dass die Übertragungsleistung des Transmitterelements in Antwort auf die empfangenen Leistungs-Steuerungs-Kommandosignale erhöht oder erniedrigt wird.

8. Telekommunikationseinrichtung nach Anspruch 6 oder 7, bei welcher das Transmitterelement einen Verstärker mit einem justierbaren Verstärkungsfaktor enthält, welcher die Leistungseinstellungen darstellt.

## Revendications

1. Procédé de calibrage d'un dispositif de télécommunications UMTS en service comprenant les étapes consistant à :
augmenter ou diminuer la puissance d'un signal UMTS émis par un élément émetteur du dispositif ;
mesurer le changement de la puissance du signal émis par l'élément émetteur ;
déterminer la différence de la taille du changement de puissance souhaité et de la taille du changement de puissance mesuré,
créer une table de calibrage contenant des données liant la puissance d'émission souhaitée aux réglages de puissance pour l'élément émetteur ; et
changer le calibrage du dispositif en reprogrammant la table de calibrage afin de réduire la différence des changements pour des changements de puissance subséquents.

2. Procédé selon la revendication 1, dans lequel les réglages de puissance pour l'élément émetteur sont des réglages de gain d'amplificateur.

3. Procédé selon la revendication 1 ou 2, dans lequel le changement du calibrage a lieu sur la base d'une pluralité de différences qui sont déterminées.

4. Procédé selon l'une quelconque des revendications précédentes, comprenant en outre l'étape consistant à calibrer initialement le dispositif avec un calibrage par défaut avant l'étape d'augmentation ou de diminution de la puissance d'un signal par l'élément émetteur.

5. Procédé selon l'une quelconque des revendications 1 à 4, comprenant en outre l'étape consistant à recevoir une commande de changement de puissance de réseau, à laquelle le dispositif répond par ladite augmentation ou diminution de la puissance du signal émis par l'élément émetteur.

6. Dispositif de télécommunications UMTS comprenant :
un élément émetteur pour émettre un signal UMTS vers une station de base distante ;
un contrôleur de puissance agencé pour augmenter ou diminuer la puissance d'émission de l'élément émetteur ;
un détecteur de puissance agencé pour détecter la puissance du signal émis par l'élément émetteur ;
un comparateur pour déterminer la différence de la taille du changement de puissance souhaité et de la taille du changement de puissance mesuré ; et
un dispositif de mémoire dans lequel est construite une table de calibrage contenant des données liant la puissance d'émission souhaitée aux réglages de puissance de l'élément émetteur ;
dans lequel le contrôleur de puissance est en outre agencé pour être recalibré en reprogrammant la table de calibrage en service afin de réduire la différence entre la taille du changement de puissance souhaité et la taille du changement de puissance mesuré.

7. Dispositif de télécommunications selon la revendication 6, comprenant en outre un élément récepteur pour recevoir des signaux de commande de contrôle de puissance émis par la station de base, et dans lequel le contrôleur de puissance est agencé pour augmenter ou diminuer la puissance d'émission de l'élément émetteur en réponse aux signaux de commande de contrôle de puissance reçus.

8. Dispositif de télécommunications selon la revendication 6 ou 7, dans lequel l'élément émetteur inclut un amplificateur ayant un gain ajustable, ce gain ajustable constituant les réglages de puissance.
